(19) Europäisches Patentamt / European Patent Office / Office européen des brevets

(11) **EP 2 902 266 B1**

(12) **EUROPEAN PATENT SPECIFICATION**

(45) Date of publication and mention
of the grant of the patent:
**21.03.2018 Bulletin 2018/12**

(21) Application number: **13842710.9**

(22) Date of filing: **26.09.2013**

(51) Int Cl.:
*B60R 13/08* (2006.01)    *D04H 1/542* (2012.01)
*D04H 1/4391* (2012.01)   *D04H 1/541* (2012.01)
*G10K 11/162* (2006.01)   *D01D 5/253* (2006.01)

(86) International application number:
**PCT/KR2013/008630**

(87) International publication number:
**WO 2014/051351 (03.04.2014 Gazette 2014/14)**

(54) **SOUND-ABSORBING MATERIAL HAVING EXCELLENT SOUND ABSORPTION PROPERTIES AND METHOD FOR MANUFACTURING SAME**

SCHALLABSORBIERENDES MATERIAL MIT HERVORRAGENDEN SCHALLABSORBIERENDEN EIGENSCHAFTEN UND VERFAHREN ZUR HERSTELLUNG DAVON

MATÉRIAU INSONORISANT PRÉSENTANT D'EXCELLENTES PROPRIÉTÉS D'INSONORISATION ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 KR 20120108764**

(43) Date of publication of application:
**05.08.2015 Bulletin 2015/32**

(73) Proprietors:
• **Hyundai Motor Company**
  **Seoul 137-938 (KR)**
• **Kia Motors Corporation**
  **Seoul 137-938 (KR)**
• **Toray Chemical Korea Inc.**
  **Gumi-si, Gyeongsangbuk-do 730-707 (KR)**

(72) Inventors:
• **KIM, Hyo Seok**
  **Seoul, 03920, (KR)**
• **KIM, Do Hyun**
  **Hwaseong-si**
  **Gyeonggi-do 445-774 (KR)**
• **KIM, Chi Hun**
  **Yongin-si**
  **Gyeonggi-do 448-130 (KR)**
• **LEE, Jung Wook**
  **Wonmi-gu, Bucheon-si**
  **Gyeonggi-do 420-751 (KR)**
• **PARK, Bong Hyun**
  **Gunpo-si**
  **Gyeonggi-do 435-756 (KR)**
• **JEONG, Kie Youn**
  **Hwaseong-si,**
  **Gyeonggi-do 445-160 (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**WO-A2-2007/095214    JP-A- 2005 141 238**
**JP-B2- 4 616 836      KR-A- 20030 000 746**
**KR-A- 20110 034 522   KR-B1- 101 289 129**
**US-A1- 2001 008 673**

## Description

The present invention relates to a method for manufacturing a sound-absorbing material and to a corresponding sound-absorbing material.

US 2001/0008673 A1 discloses a method for manufacturing a sound-absorbing material using a heteromorphic section fiber. In particular, a step of shaping a fiber assembly is disclosed, which includes a binding material for forming a binding structure between heteromorphic section fibers that have heteromorphic sectional shapes and form matrix structures into the shape of non-woven fabric through a needle punching process or a thermal bonding process.

More particularly, it relates to a sound-absorbing material with excellent sound-absorbing performance, which can be used for blocking inflow of external noise into vehicle interior by being attached as vehicle components or interior and exterior materials of a vehicle body, and can be used in electric devices and the like that use motor parts so as to improve noise insulation performance thereof.

### (b) Background Art

In general, noise introduced into a vehicle may be classified into a noise generated at an engine and introduced through a vehicle body and a noise generated when tires are contacted with a road surface and introduced through a vehicle body. There may be two ways to block theses noises such as improving sound-absorbing performance and improving noise insulation performance. Sound-absorbing means that generated sound energy is converted into thermal energy and then dissipated while it is transmitted through internal route of a material, and noise insulation means that generated sound energy is reflected and blocked by a shelter.

According to such characteristics of sound, in order to improve Noise, Vibration & Harshness (NVH) of a vehicle in general, a heavier and thicker sound-absorbing material has been mainly used in luxury cars. However, when such sound-absorbing material is used, noise may be reduced, but there is a problem of deteriorating fuel efficiency by increasing vehicle weight.

Further, in order to overcome problems of the conventional sound-absorbing material, a method in which porosity of the material is improved by thinning fiber thickness have been developed thereby improving sound-absorbing performance and also reducing weight of fiber aggregate. However, this method may also have a weakness such that needs surface density of the fiber aggregate may be improved in order to improve the desired NVH performance.

Further, in order to manufacture non-woven type fiber aggregate, staple fiber and binder fiber are mixed together at a proper ratio. As the binder fiber, in general, staple fiber manufactured by conjugate-spinning regular polyester is used for an inner layer and low melting polyester is used for an outer layer.

However, when using this conventional binder fiber with the low melting polyester, the fiber aggregate is hardened, and thus there may be a problem that vibration generated by sound wave propagation and transmitted to matrix structure is not fully attenuated, thereby reducing sound absorbtion coefficient mainly at low frequency region.

### SUMMARY OF THE INVENTION

The present invention has been made in an effort to solve the above-described problems associated with prior art.

The present invention is objected to provide a sound-absorbing material, which may improve sound absorption coefficient and transmission loss by forming large surface area and air layer, so as to maximize viscosity loss and dissipation route of incident sound energy, and makes light-weight design thereof possible because it can realize excellent sound-absorbing performance even using reduced amount of fiber; and a method for manufacturing thereof.

Further, the present invention is objected to provide a sound-absorbing material, which may improve formability as well as maintain enough strength between fiber, and may have improved rebound resilience, thereby ultimately having excellent vibration attenuation capability against sound energy transmitted inside matrix; and a method for manufacturing thereof.

To achieve the above objects, in one aspect, the present invention provides a method for manufacturing a sound-absorbing material according to independent claim 1.

In a preferred embodiment, the sound-absorbing material may be manufactured by using the non-circular shaped fiber satisfying the value of the Formula 1 of 2.6 or greater.

In another preferred embodiment, the sound-absorbing material may be manufactured by using the non-circular shaped fiber satisfying the value of the Formula 1 of 3.0 or greater.

In still another preferred embodiment, the non-circular shaped fiber may be at least one selected from the group consisting of six-pointed star shape, 3-bar flat type, 6 leaf type, 8 leaf type and wave type.

In yet another preferred embodiment, the non-circular shaped fiber may be 35 to 65 mm in length.

According to the invention, the binder fiber comprises a low melting (LM) elastomer having elastic recovery modulus of 50 to 80%, and rebound resilience rate of the sound-absorbing material may be 50 to 80%.

In a further preferred embodiment, the binder fiber may be conjugated fiber which is conjugate-spun by using the LM elastomer as one component.

In another further preferred embodiment, the LM elastomer may be at least one selected from the group consisting of a polyester-based polymer, a polyamide-based polymer, a polystyrene-based polymer, a polyvinylchloride-based polymer and a polyurethane-based polymer.

In still another further preferred embodiment, the LM elastomer may be manufactured by esterification and polymerization steps using dimethyl terephthalate(DMT) and dimethyl isophthalate(DMI), or terephthalic acid(TPA) and isophthalic acid(IPA) as an acid ingrediet(Diacid), and 1,4-butanediol(1,4-BD) and polytetramethyleneglycol(PTMG) as a diol ingredient (Diol).

In yet another further preferred embodiment, the sound-absorbing material may be manufactured by using the non-circular shaped fiber of 50 to 80 wt% based on the total weight of the sound-absorbing material and the binder fiber of 20 to 50 wt% based on the total weight of the sound-absorbing material.

Further, in another aspect, the present invention provides a sound-absorbing material, according to independent claim 6.

In a preferred embodiment, the non-circular shaped fiber may satisfy the value of the Formula 1 of 2.6 or greater.

In another preferred embodiment, the non-circular shaped fiber may be at least one selected from the group consisting of six-pointed star shape, 3-bar flat type, 6-leaf type, 8-leaf type and wave type.

In still another preferred embodiment, the non-circular shaped fiber may be 35 to 65 mm in length.

In yet another preferred embodiment, the non-circular shaped fiber may be 1.0 to 7.0 De in fineness.

According to the invention, the binder fiber comprises a LM elastomer having elastic recovery modulus of 50 to 80%, and rebound resilience rate of the sound-absorbing material may be 50 to 80%.

In a further preferred embodiment, the binder fiber may be conjugated fiber which is conjugate-spun by using the LM elastomer as one component.

In another further preferred embodiment, the LM elastomer may be at least one selected from the group consisting of a polyester-based polymer, a polyamide-based, polystyrene-based polymer, a polyvinylchloride-based polymer and a polyurethane-based polymer.

In still another further preferred embodiment, the sound-absorbing material may comprise the non-circular shaped fiber of 50 to 80 wt% based on the total weight of the sound-absorbing material and the binder fiber of 20 to 50 wt% based on the total weight of the sound-absorbing material.

In yet another further preferred embodiment, the non-circular shaped fiber may satisfy the value of the Formula 1 of 3.0 or greater.

Hereinafter, terms used in the present invention will be described.

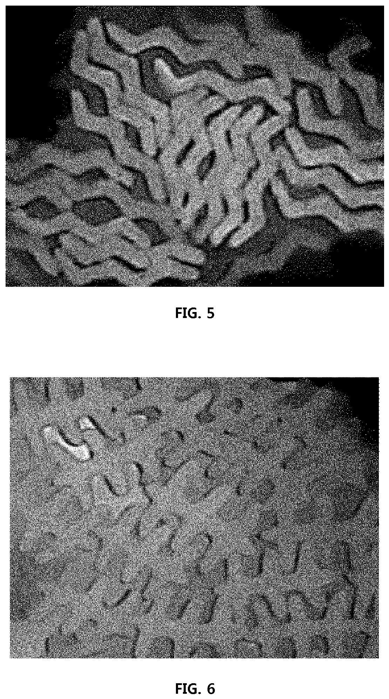

The term "wave type non-circular shaped fiber", as used in the present invention, refers to fiber that may have cross section shape in wave form, and specifically, its shape is illustrated in FIG. 5.

The sound-absorbing material with excellent sound-absorbing performance of the present invention can improves sound absorption coefficient and transmission loss by forming large surface area and air layer, so as to induce viscosity loss of incident sound energy. Further, it makes light-weight design thereof possible since it can provide excellent sound-absorbing performance using reduced amount of fiber, and can improve sound-absorbing performance by using binder fiber having rebound resilience, so as to maintain enough bonding strength between fibers and also to maximize viscosity loss of sound energy transmitted to fiber structure.

Accordingly, a sound-absorbing material having excellent sound-absorbing performance, which can be used for improving noise insulation performance of electric devices and the like using motor parts as well as used through transport such as vehicle, train, ship, aircraft and the like, and a method for manufacturing thereof can be provided.

## BRIEF DESCRIPTION OF THE DRAWINGS

FIG. 1 is a six-pointed star shaped non-circular shaped fiber, which is contained in the sound-absorbing material according to a preferred embodiment of the present invention;

FIG. 2 is a 3-bar flat type non-circular shaped fiber, which is contained in the sound-absorbing material according to a preferred embodiment of the present invention;

FIG. 3 is a 6-leaf type non-circular shaped fiber, which is contained in the sound-absorbing material according to a preferred embodiment of the present invention;

FIG. 4 is a 8-leaf type non-circular shaped fiber, which is contained in the sound-absorbing material according to a preferred embodiment of the present invention;

FIG. 5 is a wave type non-circular shaped fiber, which is contained in the sound-absorbing material according to a preferred embodiment of the present invention;

FIG. 6 is a 8-leaf type non-circular shaped fiber, which is contained in the sound-absorbing material according to a preferred embodiment of the present invention;

FIG. 7 is a 8-leaf type non-circular shaped fiber, which is contained in the sound-absorbing material according to a preferred embodiment of the present invention; and

FIG. 8 is a drawing showing L and W of the 8-leaf type non-circular shaped fiber according to a preferred embodiment of the present invention as an example.

## DETAILED DESCRIPTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

As described above, since in the conventional sound-absorbing material for a fiber structure, surface density and thickness of fiber aggregate are increased in order to improve sound-absorbing performance and noise insulation performance by increasing porosity and sound wave dissipation route, the vehicle becomes heavier thereby deteriorating fuel efficiency. Further, when low melting polyester binder fiber is used for the conventional sound-absorbing material for a fiber structure, the fiber aggregate may be hardened. Thus, there was a problem that sound absorption coefficient of low frequency is reduced since vibration generated by sound wave propagation and transmitted to matrix structure is not fully attenuated.

Accordingly, the present invention provides a sound-absorbing material which comprises: a non-circular shaped fiber satisfying the following Formula 1; and a binder fiber which partly binds a plurality of the non-circular shaped fibers, to find solutions for the above described problems.

Formula 1

$$1.5 \leq \frac{P}{\sqrt{4 \times \pi \times A}}$$

(A: Fiber cross sectional area ($\mu m^2$), P: Circumference length of fiber cross section ($\mu m$))

As such, sound absorption coefficient and transmission loss may be improved by forming large surface area and air layer, so as to induce viscosity loss of incident sound energy. Further, -weight design thereof may be obtained because excellent sound-absorbing performance may be obtained using reduced amount of fiber, and sound-absorbing performance may be improved by using binder fiber having rebound resilience, so as to maintain enough binding strength between fiber and also to maximize viscosity loss of sound energy transmitted to a fiber structure. Thus, a sound-absorbing material having excellent sound-absorbing performance, which can be used for improving noise insulation performance of electric devices and the like using motor parts as well as used through transport such as vehicle, train, ship, aircraft and the like, and a method for manufacturing thereof may be provided.

In general, when sound wave conflicts with a certain material, it may cause viscosity loss, thereby causing noise reduction while mechanical energy of the sound wave is converted to thermal energy. In order to reduce noise by increasing energy loss rate against sound wave introduced to the fiber aggregate with the same weight, it is advantageous to increase surface area of fiber where viscosity loss of sound wave occurs.

The non-circular shaped fiber satisfy the $\eta$ value of 1.5 or greater, calculated as

$$\eta = \frac{P}{\sqrt{4 \times \pi \times A}}$$

(A: Fiber cross sectional area($\mu m^2$), P: Circumference length of fiber cross section($\mu m$)), and it may secure greater surface area than the fiber used to the conventional sound-absorbing material for a fiber structure, and improve sound absorption coefficient and transmission loss. When the η value is less than 1.5, the fiber surface area may be small. Thus, there is a problem that light-weight design thereof may be impossible because a large amount of fiber needs to effectively embody sound-absorbing performance. The higher η value means the greater fiber surface area. Accordingly, more preferably, the non-circular shaped fiber used in the present invention may have the η value of 2.6 or greater, and more preferably the value may be 3.0 to 7.0. If the η value of the non-circular shaped fiber used in the present invention is greater than 7.0, there may be a problem that production cost may be increased due to increase of nozzle production cost, facilities replacement related to cooling efficiency improvement, polymer modification for solidification rate improvement, productivity reduction and the like.

The non-circular shaped fiber of the present invention, which satisfies the η value of 1.5 or greater, may be a six-pointed star shape, 3-bar flat type, 6-leaf type, 8-leaf type or wave type, or a combination thereof. In the case of the wave type, when the η value satisfies 1.5 or greater, specific shape such as the number of the curved point in the wave shape, length and width of the cross section and the like may vary. The number of the curved point in the wave shape means the point where the direction is changed to the length direction of the cross section, and for example, the number of the curved point of the wave type non-circular shaped fiber in FIG. 5 is 4.

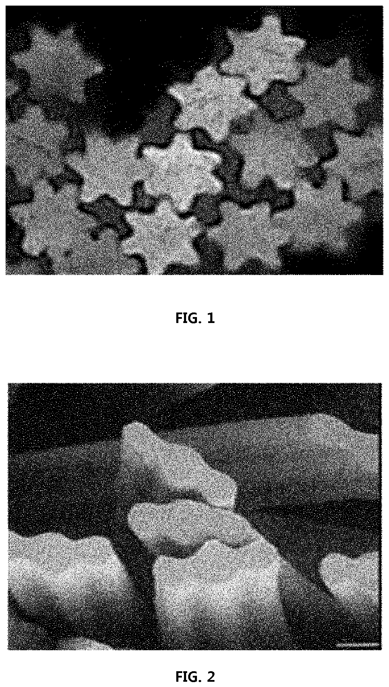

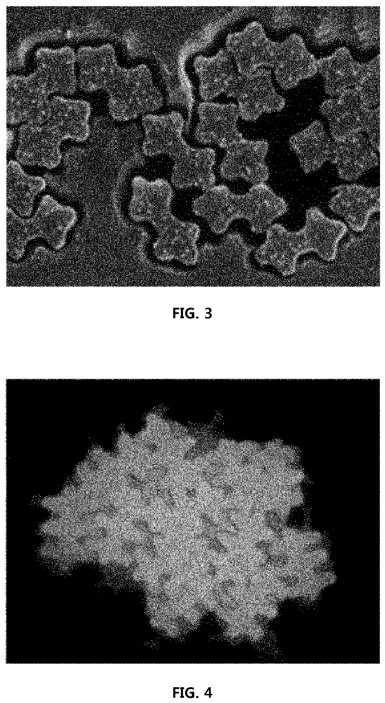

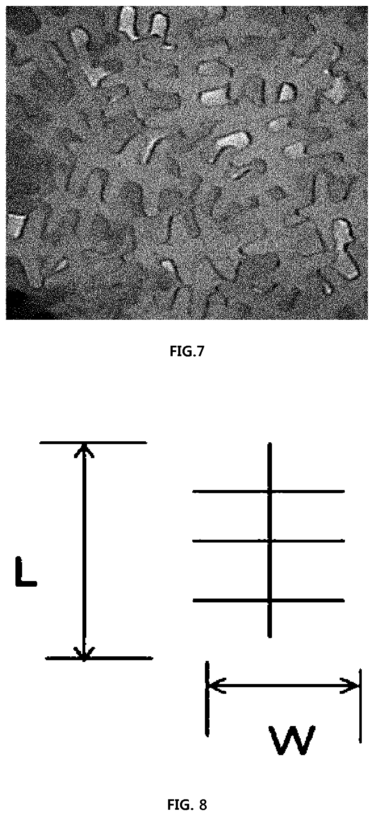

Specifically, FIG. 1 is six-pointed star shape non-circular shaped fiber according to a preferred embodiment of the present invention, and its η value is 1.51, and FIG. 2 is 3-bar flat type non-circular shaped fiber according to a preferred embodiment of the present invention, and its η value is 1.60. Further, FIG. 3 is 6-leaf type non-circular shaped fiber according to a preferred embodiment of the present invention, and its η value is 1.93, FIG. 4 is 8-leaf type non-circular shaped fiber according to a preferred embodiment of the present invention, and its η value is 2.50, FIG. 5 is wave type non-circular shaped fiber according to a preferred embodiment of the present invention, and its η value is 2.55, FIG. 6 is 8-leaf type non-circular shaped fiber according to a preferred embodiment of the present invention, and its η value is 2.8, and FIG. 7 is 8-leaf type non-circular shaped fiber according to a preferred embodiment of the present invention, and its η value is 3.2.

The η value of a general circular type fiber with circular cross section is 1.0, and its sound absorption coefficient and transmission loss are significantly reduced because its surface area is not large enough (see Comparative Example 1), and although the non-circular shaped fiber are a six-pointed star shape, 3-bar flat type, 6-leaf type, 8-leaf type or wave type, if the η value does not satisfy 1.5 or greater, the surface area which can generate viscosity loss of the sound energy is not enough. Accordingly, those are not suitable as the non-circular shaped fiber used for the sound-absorbing material of the present invention (see Comparative Examples 2 to 5).

More preferably, the non-circular shaped fiber used in the present invention may have the L/W value of 2 to 3. L is the abbreviation for Length which is vertical length of fiber, and W is the abbreviation for Width which is length against horizontal direction connecting between angular points. Specifically, FIG. 8 shows L and W values of the 8-leaf type non-circular shaped fiber. In the case of the cross section of the 8-leaf type non-circular shaped fiber, when the longer direction is called vertical length, the length may be expressed as L, and in the 3 shorter shape, the distance between angular points may be expressed as W.

Further, the non-circular shaped fiber used in the present invention may have 6 to 8 angular points more preferably, but it is not limited to the L/W or the number of the angular point. The non-circular shaped fiber which satisfies the η value of 1.5 or greater may be preferred.

Length of the non-circular shaped fiber may be 35 to 65 mm. When it is less than 35 mm, it may be difficult to form and produce fiber aggregate due to wide gap between the fibers, and sound-absorbing and noise insulation performance may be reduced due to excess porosity. When it is over 65 mm, porosity may be reduced due to too narrow gap between the fibers, thereby reducing sound absorption coefficient. Further, fineness of the non-circular shaped fiber may be 1.0 to 7.0 De, and it may be more effective to sound-absorbing performance as fineness becomes lower. When the fineness of the non-circular shaped fiber is less than 1.0 De, there may be a problem to control the optimum shape of the targeted cross section, and when it is greater than 7.0 De (denier), there may be a difficulty on non-woven fiber manufacturing process and a problem of reduction of sound-absorbing performance when it is manufactured as the fiber aggregate.

The material of the non-circular shaped fiber included in the sound-absorbing material of the present invention may be preferably polyethylene terephthalate (PET), but not particularly limited thereto. Polypropylene (PP), rayon, and any polymer that may be spun in fiber form may be used preferably as a sound-absorbing material.

Further, the sound-absorbing material of the present invention contains binder fiber which partly binds a plurality of the non-circular shaped fibers.

The binder fiber contains a low melting (LM) elastomer. The elastomer generally refers to a polymer material having excellent elasticity such as rubbers, and i.e., it means a polymer having a characteristic that stretches when it is pulled by external force, and it is back to the original length when the external force is removed. The LM elastomer used in the present invention may have elastic recovery modulus of 50 to 80%. When elastic recovery modulus is less than 50%, the fiber aggregate is hardened, and sound-absorbing performance may be reduced due to short flexibility. When it is greater than 80%, there may be problems that processability may be reduced when manufacturing the fiber aggregate, as well as production cost of the polymer itself may be increased.

In the past, after the binder fiber was melted down and bound major fiber together, the fiber aggregate was hardened such that there was a problem that sound absorption coefficient was reduced because vibration generated by sound wave propagation and transmitted to matrix structure was not fully attenuated. However, in the present invention, rebound resilience rate (ASTM D 3574) of fiber structure is increased up to 50 to 80% by containing a LM elastomer having elastic recovery modulus of 50 to 80% in the binder fiber of the fiber aggregate, and attenuation capability for the vibration which is ultimately transmitted inside the matrix is improved, and thus sound absorption coefficient and transmission loss may be improved.

The LM elastomer may be a polyester-based polymer, a polyamide-based polymer, a polystyrene-based polymer, a polyvinylchloride-based polymer or polyurethane-based polymer, or combinations thereof.

Further, more preferably, the LM elastomer may be manufactured by esterification and polymerization steps using dimethyl terephthalate(DMT) and dimethyl isophthalate(DMI), or terephthalic acid(TPA) and isophthalic acid(IPA) as an acid ingredient(Diacid); and 1,4-butanediol(1,4-BD) and polytetramethyleneglycol(PTMG) as a diol ingredient (Diol).

The acid ingredient (Diacid) uses dimethyl terephthalate (DMT) and dimethyl isophthalate (DMI), or terephthalic acid (TPA) and isophthalic acid (IPA). The dimethyl terephthalate (DMT) and terephthalic acid (TPA) form a crystal region by reacting with the diol ingredient, and the dimethyl isophthalate (DMI) and isophthalic acid (IPA) form a non-crystal region by reacting with the diol ingredient, thereby providing low melting function and elasticity.

Mixing ratio of dimethyl terephthalate (DMT) and dimethyl isophthalate (DMI) may be a molar ratio of 0.65~0.80: 0.2~0.35, preferably, and mixing ratio of terephthalic acid (TPA) and isophthalic acid (IPA) also may be molar ratio of 0.65~0.80: 0.2~0.35, preferably. When the molar ratio of dimethyl isophthalate (DMI) and isophthalic acid (IPA) is less than the above described range, elastic recovery modulus may be deteriorated, and the low melting function may not be expressed. When the molar ratio of dimethyl isophthalate (DMI) and isophthalic acid (IPA) is greater than the above described range, physical properties may be deteriorated.

The diol ingredient (Diol) uses 1,4-butanediol (1,4-BD), polytetramethyleneglycol(PTMG), and 1,4-butanediol forms a crystal region by reacting with acid ingredient and polytetramethyleneglycol(PTMG) forms a non-crystal region by reacting with acid ingredient, thereby providing low-melting function and elasticity.

Mixing ratio of the 1,4-butanediol (1,4-BD), polytetramethyleneglycol (PTMG may be a molar ratio of 0.85~0.95: 0.05~0.15, preferably. When the molar ratio of polytetramethyleneglycol (PTMG) is less than the above described range, elastic recovery modulus may be deteriorated, and the low-melting function may not be expressed. When the molar ratio of polytetramethyleneglycol (PTMG) is greater than the above described range, physical properties may be deteriorated. 1,4-butanediol (1,4-BD) may be used as a mixture with ethyleneglycol (EG) within the above described range.

Further, molecular weight of the polytetramethyleneglycol (PTMG) may be in a range of 1500 to 2000, preferably. When the molecular weight of the polytetramethyleneglycol (PTMG) is out of the said range, elasticity and physical properties of the LM elastomer to be manufactured may not be suitable for use.

The acid ingredient and the diol ingredient may be mixed at molar ratio of 0.9~1.1: 0.9~1.1 and polymerized, preferably. When any one ingredient of the acid ingredient and the diol ingredient is excessively mixed, it is not used to be polymerized and is discarded. Accordingly, it is preferred to mix the acid ingredient and the diol ingredient at similar amounts.

As described above, the LM elastomer manufactured from dimethyl terephthalate(DMT), dimethyl isophthalate(DMI) as the acid ingredient(Diacid) and 1,4-butanediol(1,4-BD), polytetramethyleneglycol(PTMG) as the diol ingredient(Diol) is manufactured to have melting point of 150~180°C and elastic recovery modulus of 50~80%.

Further, the binder fiber of the sound-absorbing material of the present invention may be a conjugated fiber which is conjugate-spun by using the LM elastomer as one component. More preferably, it may be sheath-core type or side by side type conjugated fiber. When the sheath-core type conjugated fiber is formed, the LM elastomer may be used as a sheath ingredient, and general polyester may be used as a core ingredient. The general polyester reduces production cost and functions as fiber supporter, and the LM elastomer allows to express elasticity and low melting function.

Preferably, the binder fiber may be manufactured by using the LM elastomer and the general polyester at weight ratio of 40:60 ~ 60:40. When the LM elastomer is contained at weight ratio of less than 40, elasticity and low melting function may be deteriorated, and when it is contained at weight ratio of over 60, there is a problem of increase of production cost.

The sound-absorbing material may contain the non-circular shaped fiber of 50 to 80 wt% based on the total weight of the sound-absorbing material and the binder fiber of 20 to 50 wt% based on the total weight of the sound-absorbing material. When the content of the non-circular shaped fiber is less than 50 wt%, it may be difficult to embody the optimal sound-absorbing and noise insulation performances due to reduced fiber surface area, but when the content of the non-circular shaped fiber is greater than 80 wt%, the content of the binder fiber becomes less than 20 wt%, relatively, and it may be difficult to maintain enough binding strength between the fiber. Thus, it may be difficult to form the sound-absorbing material to a certain shape and the vibration, which is generated from sound wave propagation and transmitted to the matrix structure, is not fully attenuated because the matrix structure is not strong, such that low frequency sound absorption coefficient may be reduced. As the content of the binder fiber is increased to 20 to 50 wt%, rebound elasticity modulus (ASTM D 3574) increases up to 50 to 80%.

This fiber structure with polymorphic cross section having excellent sound-absorbing performance is manufactured by a method for manufacturing a sound-absorbing material that comprises forming fiber aggregate in the nonwoven fabric fabric form. The fiber aggregate comprises: a non-circular shaped fiber satisfying the following Formula 1; and binder fiber which partly binds a plurality of the non-circular shaped fibers.

$$\underline{Formula\ 1}$$

$$1.5 \leq \frac{P}{\sqrt{4 \times \pi \times A}}$$

(A: Fiber cross sectional area ($\mu$m$^2$), P: Circumference length of fiber cross section ($\mu$m))

The sound-absorbing material may be manufactured by forming the fiber aggregate containing the non-circular shaped fiber and the binder fiber in the non-woven form having a certain surface density by general manufacturing processes for a fiber structure sound-absorbing material such as needle punching process or thermal adhesion process and the like. Hereinafter, detailed description about the above-described non-circular shaped fiber and the binder fiber, which are identically applied to the method for manufacturing the sound-absorbing material of the present invention will be omitted.

**EXAMPLES**

The following examples illustrate the invention and are not intended to limit the same.

**Example 1**

Polyester-based 8-leaf type (FIG. 4, $\eta$ = 2.5) non-circular shaped fiber (6.5 De, 61 mm, strength 5.8 g/D, elongation rate 40%, crimp number 14.2/inch) and sheath-core type conjugated fiber containing polyester-based LM elastomer as binder fiber were mixed at weight ratio of 8:2, the mixture was physically broken down through needle punching process after controlling weight constantly, and then non-woven type fiber aggregate having thickness of 20 mm and surface density of 1600 g/m$^2$ was manufactured through a general thermal adhesion process. Rebound resilience of the manufactured sound-absorbing material was 55%.

The sheath-core type conjugated fiber containing polyester-based LM elastomer as binder fiber contained polyester-based LM elastomer as a sheath ingredient, and the polyester-based LM elastomer used a mixture of terephthalic acid of 75 mole% and isophthalic acid of 25 mole% as an acid ingredient and a mixture of polytetramethyleneglycol of 8.0 mole% and 1,4-butanediol of 92.0 mole% as a diol ingredient, and manufactured by mixing and polymerizing the acid ingredient and the diol ingredient at molar ratio of 1: 1. The LM elastomer manufactured as mentioned above has melting point of 50 °C, intrinsic viscosity of 1.4 and elastic recovery modulus of 80%. As the core ingredient, polyethylene terephthalate(PET) having melting point of 260 °C and intrinsic viscosity of 0.65 was used, and conjugated fiber having fineness of 6 D, strength of 3.0 g/D, elongation rate of 80%, crimp number of 12/inch and fiber length of 64 mm was manufactured by spinning using a conjugate spinning nozzle, which can conjugate spin the polyester-based LM elastomer and the general PET at spinning temperature of 275 °C and winding speed of 1,000 mm/min, elongated by 3.3 folds at 77 °C, and finally heated at 140 °C.

**Example 2**

The procedure of Example 1 was repeated except for manufacturing non-woven type fiber structure having thickness of 20 mm, surface density of 1200 g/m$^2$.

**Example 3**

The procedure of Example 1 was repeated except for manufacturing a sound-absorbing material using six-pointed star shaped (FIG. 1, η = 1.51) non-circular shaped fiber.

**Example 4**

The procedure of Example 1 was repeated except for manufacturing a sound-absorbing material using 3-bar flat type (FIG. 2, η = 1.60) non-circular shaped fiber.

**Example 5**

The procedure of Example 1 was repeated except for manufacturing a sound-absorbing material using 6-leaf type (FIG. 3, η = 1.93) non-circular shaped fiber.

**Example 6**

The procedure of Example 1 was repeated except for manufacturing a sound-absorbing material using wave type (FIG. 5, η = 2.55) non-circular shaped fiber.

**Example 7**

The procedure of Example 1 was repeated except for manufacturing a sound-absorbing material using 8-leaf type (FIG. 6, η = 2.8) non-circular shaped fiber non-circular shaped fiber.

**Example 8**

The procedure of Example 1 was repeated except for manufacturing a sound-absorbing material using 8-leaf type (FIG. 7, η = 3.2) non-circular shaped fiber non-circular shaped fiber.

**Example 9**

The procedure of Example 1 was repeated except for manufacturing a sound-absorbing material using low melting PET fiber as binder fiber. Rebound resilience of the manufactured sound-absorbing material was 30%.

**Comparative Example 1**

The procedure of Example 1 was repeated except for manufacturing a sound-absorbing material using circular (η = 1.0) shaped fiber.

**Comparative Example 2**

The procedure of Example 1 was repeated except for manufacturing a sound-absorbing material using five-pointed star shape (η = 1.30) non-circular shaped fiber.

**Comparative Example 3**

The procedure of Example 1 was repeated except for manufacturing a sound-absorbing material using wave type (η = 1.42) non-circular shaped fiber.

**Comparative Example 4**

The procedure of Example 1 was repeated except for manufacturing a sound-absorbing material using Y type (η = 1.26) non-circular shaped fiber.

**Comparative Example 5**

The procedure of Example 1 was repeated except for manufacturing a sound-absorbing material using six-pointed star shape (η = 1.41) non-circular shaped fiber.

**<Test Example>**

In order to evaluate sound-absorbing and noise insulation performances of the sound-absorbing materials manufactured according to Examples 1 to 9 and Comparative Examples 1 to 5, the materials were tested as the following measuring methods, and the results were shown in Tables 1 and 2.

**1. Sound absorption coefficient**

In order to measure sound absorption coefficient, 3 specimens applicable to ISO R 354, Alpha Cabin method were manufactured, respectively, sound-absorbing coefficients were measured and the mean of the measured sound-absorbing coefficients were shown in Table 1.

**2. Transmission loss**

In order to measure noise insulation effect, 3 specimens applicable to a transmission loss coefficient evaluating device (APAMAT-II) were manufactured, respectively, insertion loss was measured, and the mean value of the measured insertion loss was shown in Table 2.

**3. Elastic recovery modulus**

A dumbbell shape specimen having thickness of 2 mm and length of 10 cm was elongated 200% at a rate of 200%/min using Instron, waited for 5 sec, and the elongated length after recovered at the same rate was measured, and then elastic recovery modulus was calculated by the following Formula.

$$\text{Elasticity Recovery Rate(\%)} = \frac{20 - (L - 10)}{20} \times 100 \quad (L: \text{Elongated Length})$$

**4. Rebound resilience rate (Ball Rebound)**

After dropping a metal ball from a certain height to a test specimen, the height of the rebound ball was measured (JIS K-6301, unit: %). Test specimen was made into a square having a side length of 50 mm or greater and thickness of 50 mm or greater, and a steel ball having weight of 16 g and diameter of 16 mm was dropped from a height of 500 mm to the test specimen, and then the maximum rebound height was measured. Then, for each 3 test specimens, the rebound value was measured at least 3 times in a raw within 1 min, and the median value was used as rebound resilience rate (%).

Table 1

| | Sound absorption coefficient per frequency(Hz) | | | |
|---|---|---|---|---|
| | 1000Hz | 2000Hz | 3150Hz | 5000Hz |
| Example 1 | 0.67 | 0.75 | 0.84 | 0.96 |
| Example 2 | 0.54 | 0.63 | 0.77 | 0.85 |
| Example 3 | 0.62 | 0.67 | 0.78 | 0.88 |
| Example 4 | 0.59 | 0.71 | 0.81 | 0.90 |
| Example 5 | 0.62 | 0.69 | 0.80 | 0.90 |
| Example 6 | 0.66 | 0.77 | 0.85 | 0.97 |
| Example 7 | 0.67 | 0.78 | 0.89 | 0.99 |
| Example 8 | 0.68 | 0.79 | 0.91 | 1.00 |
| Example 9 | 0.50 | 0.70 | 0.79 | 0.89 |

(continued)

|  | Sound absorption coefficient per frequency(Hz) | | | |
|---|---|---|---|---|
|  | 1000Hz | 2000Hz | 3150Hz | 5000Hz |
| Comparative Example 1 | 0.51 | 0.61 | 0.74 | 0.83 |
| Comparative Example 2 | 0.57 | 0.65 | 0.75 | 0.86 |
| Comparative Example 3 | 0.57 | 0.62 | 0.76 | 0.86 |
| Comparative Example 4 | 0.56 | 0.64 | 0.75 | 0.85 |
| Comparative Example 5 | 0.61 | 0.65 | 0.75 | 0.86 |

Table 2

|  | Transmission loss(dB) per frequency(Hz) | | | |
|---|---|---|---|---|
|  | 1000Hz | 2000Hz | 3150Hz | 5000Hz |
| Example 1 | 25 | 27 | 35 | 43 |
| Example 2 | 23 | 24 | 32 | 41 |
| Example 3 | 22 | 25 | 32 | 40 |
| Example 4 | 24 | 25 | 33 | 41 |
| Example 5 | 24 | 26 | 33 | 41 |
| Example 6 | 25 | 27 | 35 | 44 |
| Example 7 | 26 | 28 | 36 | 45 |
| Example 8 | 27 | 30 | 38 | 47 |
| Example 9 | 21 | 24 | 31 | 40 |
| Comparative Example 1 | 22 | 23 | 31 | 40 |
| Comparative Example 2 | 21 | 24 | 31 | 40 |
| Comparative Example 3 | 22 | 24 | 32 | 41 |
| Comparative Example 4 | 21 | 24 | 31 | 40 |
| Comparative Example 5 | 22 | 24 | 32 | 40 |

As shown in Tables 1 and 2, as comparing the results of measuring sound-absorbing and noise insulation performances in Examples 1 to 9 and Comparative Examples 1 to 5, it was found that sound-absorbing and noise insulation performances of the fiber aggregate were improved as the fiber surface areas were increased.

Specifically, as comparing the result of measuring performances of Example 2 and Comparative Example 1, it was found that the sound-absorbing material using the non-circular shaped fiber of the present invention had better sound-absorbing and noise insulation performances than the fiber sound-absorbing material using fiber with circular cross section generally used, despite the reduced surface density of the fiber aggregate, and therefore, light-weight design thereof is possible by using reduced amount of fiber.

It is found that Examples 1 to 9 satisfying the $\eta$ value of 1.5 or greater had improved sound absorption coefficient and transmission loss than Comparative Examples 1 to 5 having the $\eta$ value of less than 1.5. It was found that Comparative Example 5 having the value of less than 1.5 also had low effect on sound absorption coefficient and transmission loss due to small surface area, although six-pointed star shape non-circular shaped fiber was used.

Further, as comparing the results of measuring performances of Example 9 using the low melting PET fiber as binder fiber and Examples 1 to 8 using the low melting elastomer, it was found that flexible structure having rebound elasticity rate of 55% was obtained by using low melting elastomer as binder fiber, and sound-absorbing performance was improved by improved attenuation capability of the vibration transmitted to the matrix structure.

**Claims**

1. A method for manufacturing a sound-absorbing material, comprising forming a fiber aggregate in a nonwoven fabric form,
   wherein the fiber aggregate comprises:

   a non-circular shaped fiber satisfying the following Formula 1; and
   a binder fiber that partly binds a plurality of the non-circular shaped fibers,

   Formula 1

   $$1.5 \leq \frac{P}{\sqrt{4 \times \pi \times A}}$$

   wherein A is a fiber cross sectional area ($\mu m^2$), P is a circumference length of fiber cross section ($\mu m$), and
   wherein the binder fiber comprises a low melting (LM) elastomer having elastic recovery modulus of 50 to 80%.

2. The method for manufacturing a sound-absorbing material of claim 1, wherein the binder fiber is a conjugated fiber which is conjugate-spun by using the LM elastomer as one component.

3. The method for manufacturing a sound-absorbing material of claim 1, wherein the LM elastomer is at least one selected from the group consisting of a polyester-based polymer, a polyamide-based polymer, a polystyrene-based polymer, a polyvinylchloride-based polymer and a polyurethane-based polymer.

4. The method for manufacturing a sound-absorbing material of claim 1, wherein the LM elastomer is manufactured by esterification and polymerization steps using dimethyl terephthalate(DMT) and dimethyl isophthalate(DMI) or terephthalic acid(TPA) and isophthalic acid(IPA) as an acid ingredient(Diacid), and 1,4-butanediol(1,4-BD), polytetramethyleneglycol(PTMG) as a diol ingredient (Diol).

5. The method for manufacturing a sound-absorbing material of claim 1, wherein the sound-absorbing material is manufactured by using the non-circular shaped fiber of 50 to 80 wt% based on the total weight of the sound-absorbing material and the binder fiber of 20 to 50 wt% based on the total weight of the sound-absorbing material.

6. A sound-absorbing material, comprising:

   a non-circular shaped fiber satisfying the following Formula 1; and
   a binder fiber that partly binds a plurality of the non-circular shaped fibers,

   Formula 1

   $$1.5 \leq \frac{P}{\sqrt{4 \times \pi \times A}}$$

   wherein A is a Fiber cross sectional area ($\mu m^2$), P is a Circumference length of fiber cross section ($\mu m$),
   wherein the binder fiber comprises a low melting (LM) elastomer having elastic recovery modulus of 50 to 80%.

7. The sound-absorbing material of claim 6, wherein the non-circular shaped fiber is at least one selected from the group consisting of six-pointed star shape, 3-bar flat type, 6-leaf type, 8-leaf type and wave type.

8. The sound-absorbing material of claim 6, wherein the non-circular shaped fiber is 35 to 65 mm in length.

9. The sound-absorbing material of claim 6, wherein the non-circular shaped fiber is 1.0 to 7.0 De in fineness.

10. The sound-absorbing material of claim 6, wherein the binder fiber is conjugated fiber which is conjugate-spun by using the LM elastomer as one component.

11. The sound-absorbing material of claim 6, wherein the LM elastomer is at least one selected from the group consisting of a polyester-based polymer, a polyamide-based polymer and a polyurethane-based polymer.

12. The sound-absorbing material of claim 6, which comprises the non-circular shaped fiber of 50 to 80 wt% based on the total weight of the sound-absorbing material and the binder fiber of 20 to 50 wt% based on the total weight of the sound-absorbing material.

13. The sound-absorbing material of claim 6, wherein the non-circular shaped fiber satisfies the value of the Formula 1 of 3.0 or greater.

**Patentansprüche**

1. Verfahren zum Herstellen eines schallabsorbierenden Materials, umfassend
   Bilden eines Faseraggregats in einer Vliesstoffform,
   wobei das Faseraggregat umfasst:

   eine nicht-kreisförmige Faser, welche die folgende Formel 1 erfüllt; und
   eine Binderfaser, die teilweise eine Vielzahl der nicht-kreisförmigen Fasern bindet, Formel 1

$$1{,}5 \leq \frac{P}{\sqrt{4 \times \pi \times A}}$$

   worin A eine Faserquerschnittsfläche ($\mu m^2$) ist, P eine Umfangslänge des Faserquerschnitts ($\mu m$) ist und wobei die Binderfaser ein niederschmelzendes (LM - low melting) Elastomer mit einem elastischen Erholungsmodul von 50 bis 80% umfasst.

2. Verfahren zur Herstellung eines schallabsorbierenden Materials nach Anspruch 1, wobei die Binderfaser eine konjugierte Faser ist, die unter Verwendung des LM-Elastomers als eine Komponente konjugatgesponnen wird.

3. Verfahren zur Herstellung eines schallabsorbierenden Materials nach Anspruch 1, wobei das LM-Elastomer mindestens eines ist, das ausgewählt ist aus der Gruppe bestehend aus einem Polymer auf Polyesterbasis, einem Polymer auf Polyamidbasis, einem Polymer auf Polystyrolbasis, einem Polymer auf Polyvinylchloridbasis und einem Polymer auf Polyurethanbasis.

4. Verfahren zur Herstellung eines schallabsorbierenden Materials nach Anspruch 1, wobei das LM-Elastomer durch Veresterungs- und Polymerisationsschritte unter Verwendung von Dimethylterephthalat (DMT) und Dimethylisophthalat (DMI) oder Terephthalsäure (TPA) und Isophthalsäure (IPA) als saurer Bestandteil (Disäure) und 1,4-Butandiol (1,4-BD), Polytetramethylenglykol (PTMG) als Diolbestandteil (Diol) hergestellt wird.

5. Verfahren zur Herstellung eines schallabsorbierenen Materials nach Anspruch 1, wobei das schallabsorbierende Material unter Verwendung der nicht-kreisförmigen Faser von 50 bis 80 Gew.-% bezogen auf das Gesamtgewicht des schallabsorbierenden Materials und der Binderfaser von 20 bis 50 Gew.-% bezogen auf das Gesamtgewicht des schallabsorbierenden Materials hergestellt wird.

6. Schallabsorbierendes Material, umfassend:

   eine nicht-kreisförmige Faser, welche die folgende Formel 1 erfüllt; und
   eine Binderfaser, die teilweise eine Vielzahl der nicht-kreisförmigen Fasern bindet, Formel 1

$$1,5 \leq \frac{P}{\sqrt{4 \times \pi \times A}}$$

worin A eine Faserquerschnittsfläche ($\mu m^2$) ist, P eine Umfangslänge des Faserquerschnitts ($\mu m$) ist, wobei die Binderfaser ein niederschmelzendes (LM - low melting) Elastomer mit einem elastischen Erholungsmodul von 50 bis 80% umfasst.

7. Schallabsorbierendes Material nach Anspruch 6, wobei die nicht-kreisförmige Faser mindestens eine ist, die ausgewählt ist aus der Gruppe bestehend aus einer sechseckigen Sternform, einem 3-Stab-Flachtyp, 6-Blatt-Typ, 8-Blatt-Typ und Wellentyp.

8. Schallabsorbierendes Material nach Anspruch 6, wobei die nicht-kreisförmige Faser eine Länge von 35 bis 65 mm aufweist.

9. Schallabsorbierendes Material nach Anspruch 6, wobei die nicht-kreisförmige Faser eine Feinheit von 1,0 bis 7,0 De aufweist.

10. Schallabsorbierendes Material nach Anspruch 6, wobei die Binderfaser eine konjugierte Faser ist, die unter Verwendung des LM-Elastomers als eine Komponente konjugatgesponnen wird.

11. Schallabsorbierendes Material nach Anspruch 6, wobei das LM-Elastomer mindestens eines ist, das ausgewählt ist aus der Gruppe bestehend aus einem Polymer auf Polyesterbasis, einem Polymer auf Polyamidbasis und einem Polymer auf Polyurethanbasis.

12. Schallabsorbierendes Material nach Anspruch 6, das die nicht-kreisförmige Faser von 50 bis 80 Gew.-% bezogen auf das Gesamtgewicht des schallabsorbierenden Materials und die Binderfaser von 20 bis 50 Gew.-% bezogen auf das Gesamtgewicht des schallabsorbierenden Materials umfasst.

13. Schallabsorbierendes Material nach Anspruch 6, wobei die nicht-kreisförmige Faser den Wert der Formel 1 von 3,0 oder größer erfüllt.

**Revendications**

1. Procédé pour la fabrication d'un matériau insonorisant, comprenant
la formation d'un agrégat de fibres sous une forme de non-tissé,
l'agrégat de fibres comprenant :

une fibre de forme non circulaire satisfaisant à la formule 1 suivante ; et
une fibre de liage qui lie en partie une pluralité des fibres de forme non circulaire,

Formule 1

$$1,5 \leq \frac{P}{\sqrt{4 \times \pi \times A}}$$

A étant une surface de section transversale de fibre ($\mu m^2$), P étant une longueur de circonférence de section transversale de fibre ($\mu m$) et
dans lequel la fibre de liage comprend un élastomère de faible point de fusion (LM) ayant un module de recouvrance élastique de 50 à 80 %.

2. Procédé pour la fabrication d'un matériau insonorisant selon la revendication 1, dans lequel la fibre de liage est une fibre conjuguée qui est filée de façon conjuguée à l'aide de l'élastomère LM en tant que l'un des constituants.

3. Procédé pour la fabrication d'un matériau insonorisant selon la revendication 1, dans lequel l'élastomère LM en est au moins un choisi dans le groupe constitué par un polymère à base de polyester, un polymère à base de polyamide, un polymère à base de polystyrène, un polymère à base de poly(chlorure de vinyle) et un polymère à base de polyuréthane.

4. Procédé pour la fabrication d'un matériau insonorisant selon la revendication 1, dans lequel l'élastomère LM est fabriqué par des étapes d'estérification et de polymérisation à l'aide de téréphtalate de diméthyle (DMT) et d'isophtalate de diméthyle (DMI) ou d'acide téréphtalique (TPA) et d'acide isophtalique (IPA) en tant qu'ingrédient acide (Diacide) et de butane-1,4-diol (1,4-BD), de polytétraméthylèneglycol (PTMG) en tant qu'ingrédient diol (Diol).

5. Procédé pour la fabrication d'un matériau insonorisant selon la revendication 1, dans lequel le matériau insonorisant est fabriqué à l'aide de la fibre de forme non circulaire à hauteur de 50 à 80 % en poids par rapport au poids total du matériau insonorisant et de la fibre de liage à hauteur de 20 à 50 % en poids par rapport au poids total du matériau insonorisant.

6. Matériau insonorisant, comprenant :

une fibre de forme non circulaire satisfaisant à la formule 1 suivante ; et
une fibre de liage qui lie en partie une pluralité des fibres de forme non circulaire,

Formule 1

$$1,5 \leq \frac{P}{\sqrt{4 \times \pi \times A}}$$

A étant une surface de section transversale de fibre ($\mu m^2$), P étant une longueur de circonférence de section transversale de fibre ($\mu m$),
dans lequel la fibre de liage comprend un élastomère de faible point de fusion (LM) ayant un module de recouvrance élastique de 50 à 80 %.

7. Matériau insonorisant selon la revendication 6, dans lequel la fibre de forme non circulaire en est au moins une choisie dans le groupe constitué par une forme en étoile à six branches, un type plat à 3 barres, un type à 6 lobes, un type à 8 lobes et un type ondulé.

8. Matériau insonorisant selon la revendication 6, dans lequel la fibre de forme non circulaire a une longueur de 35 à 65 mm.

9. Matériau insonorisant selon la revendication 6, dans lequel la fibre de forme non circulaire a une finesse de 1,0 à 7,0 De.

10. Matériau insonorisant selon la revendication 6, dans lequel la fibre de liage est une fibre conjuguée qui est filée de façon conjuguée à l'aide de l'élastomère LM en tant que l'un des constituants.

11. Matériau insonorisant selon la revendication 6, dans lequel l'élastomère LM en est au moins un choisi dans le groupe constitué par un polymère à base de polyester, un polymère à base de polyamide et un polymère à base de polyuréthane.

12. Matériau insonorisant selon la revendication 6, qui comprend la fibre de forme non circulaire à hauteur de 50 à 80 % en poids par rapport au poids total du matériau insonorisant et la fibre de liage à hauteur de 20 à 50 % en poids par rapport au poids total du matériau insonorisant.

13. Matériau insonorisant selon la revendication 6, dans lequel la fibre de forme non circulaire satisfait à la valeur de la formule 1 supérieure ou égale à 3,0.

FIG. 1

FIG. 2

FIG. 3

FIG. 4

FIG. 5

FIG. 6

FIG.7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010008673 A1